# EUROPEAN PATENT APPLICATION

(11) **EP 1 850 279 A1**
(43) Date of publication of application: **31.10.2007**
(21) Application number: 07007650.0
(22) Date of filing: 13.04.2007
(51) Int. Cl.: G06Q 10/00, G06F 21/00, G06F 17/30, H04L 29/06

(54) **Service directory**

(30) Priority: 28.04.2006 US 413324
(71) Applicant: SAP AG, 69190 Walldorf (DE)
(72) Inventor: Moore, Dennis, Hillsborough, CA 94010 (US)
(74) Representative: Müller-Boré & Partner Patentanwälte

(57) **Abstract**

Methods and apparatuses provide for a dynamic view and access to data and workflows. The dynamic view and access is generated through a modeled software application based on a determined authorization. The authorization enables access to data, and is based on a context in which the data is requested or attempted to be accessed. The context includes a business role associated with the request or access.

## Description

### CLAIM OF PRIORITY

This application claims the benefit of priority to U.S. Provisional Application No. 60/705,108 [Attorney Docket 6631.P039Z], filed August 2, 2005, and to U.S. Provisional Application No. 60/705,222 [Attorney Docket 6570.P317Z], filed August 2, 2005.

### FIELD

Embodiments of the invention relate to modeled software applications, and more specifically to a composite application enterprise data access center.

### BACKGROUND

In order to perform work, employees need access to resources with which to accomplish their work. An employee familiar with the systems and operations of an enterprise may have access to information and resources by virtue of the familiarity. However, new employees may be unaware of how to access information/resources to perform work, or where to obtain the resources necessary to perform work. In order to familiarize an employee with the systems and operations of the enterprise, employees (either new, or existing employees performing a new operation) traditionally have been given instructions for accessing company websites, links, and files locations in certain networks. The information may or may not be provided in an organized manner, and even if organized, may be difficult for an employee to process. Thus, traditional methods of imparting information/resources to an employee to perform work are inefficient.

Some enterprises provide employee websites to organize and provide work and information to employees. Traditional approaches involve the development of websites with actual web addresses. The use of custom-developed websites is not economical. Additionally, the websites would then need to be managed for information and deletion purposes, and/or may result in the accumulation of high numbers of unused websites. Some enterprise implementations include the use of websites or collaboration rooms for projects. Project members can be provisioned for the collaboration room as they were assigned to the projects.

In addition to the limitations on providing and accessing data, further inefficiencies result from the mechanisms through which employees perform work as system users. The mechanism of performing work is generally an application. Traditional applications include user interfaces and shareable and private logic, and communicated with each other through a shared database. Traditional applications also cause the user of the applications to have to work by navigating among all available functions or mechanisms. Additionally, applications that provide a view to the user to enable the user to access and perform a task traditionally provide a single view for all users and for every task. The limited access to data and systems, and the ignorance of the system to the user or the task involved result in significant limits on the available content to which a user has access for performing execution level tasks.

The limits on available content also cause the user to become the integration mechanism of different systems. The user is traditionally required to search among everything in the underlying systems in order to find what is needed to perform a task. For example, to perform a task related to a hiring process, a user traditionally may have to access one or more items from a human resources system, a project system, etc.

Providing information and resources to an employee necessary for the employee to perform work is traditionally time-consuming and expensive in terms of resources. The extra development necessary to provide access to enterprise data is inefficient. Providing traditional applications as the mechanisms for an employee to perform work result in inefficient use of an employee's time and of enterprise resources.

### SUMMARY

Methods and apparatuses provide for a dynamic view and access to data and workflows. The dynamic view and access is generated through a modeled software application based on a determined authorization. The authorization enables access to data, and is based on a context in which the data is requested or attempted to be accessed. The context includes a business role associated with the request or access.

### BRIEF DESCRIPTION OF THE DRAWINGS

The following description includes discussion of various figures having illustrations given by way of example of implementations of embodiments of the invention. The drawings should be understood by way of example, and not by way of limitation.

**Figure 1** is a block diagram of an embodiment of an application framework with run-time and design-time components.

**Figure 2** is a block diagram of an embodiment of an enterprise service architecture.

**Figure 3** is a block diagram of an embodiment of a composite application architecture.

**Figure 4A** is a block diagram of an embodiment of a user device with a service directory.

**Figure 4B** is a block diagram of an embodiment of a user device with a dynamic work center.

**Figure 5** is a block diagram of an embodiment of callable services.

**Figure 6** is a block diagram of an embodiment of a dynamic work center having access to multiple backend services.

**Figure 7** is a block diagram of an embodiment of a control center having a dynamic work center.

**Figure 8** is a block diagram of an embodiment of a dynamic work center accessed via a tab view.

**Figure 9** is a flow diagram of an embodiment of generating a composite application.

**Figure 10** is a flow diagram of an embodiment of accessing data in a composite view.

### DETAILED DESCRIPTION

As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive. Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

The development of composite applications provides alternative mechanisms to provide information and resources for an employee to perform work. A composite application can be developed as a view on data and access to services that can dynamically provide information based on the identification of the user and/or the project involved. In one embodiment, a composite application is provided within a web browser. Thus, access to particular data and work resources can be considered from one perspective as pseudo websites. A composite application is a modeled application generated within a framework, as described in more detail below.

When referring to composite applications, or composite views and data accesses, the term "website" is a virtual concept. Rather than being a website in the traditional sense, where content is developed in a standard language for viewing by a web browser, the virtual concept of a "website" refers to a view on data or services. The data and services may be provided from any number of entities within an enterprise, including files, databases, queries, applications, etc. The view is related to a business role, or a role of the user. A business role refers to a position or a status within the enterprise, and may refer to a function or purpose to be provided by the role. A business role can be assigned or associated with a job or function of a position within a business process of a company. A business role may be indicated within a business process, or within a central location within enterprise data. In one embodiment, a business role may be determined from context, for example, determining an identity of a requestor that requests a particular business process. A business role may also be indicated (e.g., passing credentials) when requesting a process.

The view is also related to an authorization. An authorization is a data structure associated with the role. Typically, an authorization is also related to a specific activity or work task to be performed. Implementation or application of the authorization, or use of the authorization provides the ability to obtain views and/or perform operations. The authorization provides access to services with which to view or operate on data. The authorization may include, but is not limited to, ability to modify or change data or a process, execute a process, view data, assign a task related to the data or a process, etc. In one embodiment, a new authorization is provided that is referred to herein as the "responsibility," or "is responsible for," authorization is provided. The responsibility authorization may designate an owner of a process or data. By designating an owner, the responsibility authorization can provide the ability to obtain views or abilities related to a process or data, even when the owner is not designated to perform operations on the process or data. Thus, views or other authorizations may generally be restricted to particular users that have roles related to performing work. However, with the responsibility authorization, a user without a role to perform work on a process or data may still have access to the process or data.

In addition to a role and an authorization, a view may be related to an activity, which is described in more detail below. In general an activity refers to work. The term "context" may be used herein to refer to any combination of roles, authorizations, and/or activities. Thus, context may refer to a specific role with a specific authorization, a particular activity with a particular role, a particular role, authorization, and activity, etc. The use of context allows a composite view to provide context mapping of data objects and processes based on some combination of roles, authorizations and activities. The context mapping enables the views to be dynamic in content and function.

The views on data may include what could be referred to in one embodiment as a dynamic work center and a service directory. The views are provided based at least in part on the role, authorization, and activity. In short, a dynamic work center refers herein to components related to work tasks. A service directory provides information and processes and services that may include components related to work tasks and to components independent of work tasks.

The composite views provide the ability to dynamically provision data and services to an employee. The data and services are dynamic because content can be assigned based on a business role and an authorization, and within the context of an activity. The business role may be one of multiple roles of a single user, as well as referring to roles of different users. In addition to dynamically providing content based on the context of the data access or request for data, a composite view can be dynamic in that the view can change as a change is made to a role, an activity, and/or an authorization. In one embodiment, work centers are dynamically provided as work is assigned to a user. When a new employee is hired, a view on information and services related to the employee's job can be provided. The composite view can reflect changes related to a transfer of an employee. Although work-related items may change automatically, the transferred employee can also choose to retain non-business "personal" or non-role-related content. In addition, new capabilities can be highlighted to ease the transition to new job requirements, access to training, access to new facilities information, etc. Thus, transferring an employee may result in the "re-provisioning" of a service directory and/or work center. Another change occurs if an employee is terminated. In this case, a service directory or work center can be "de-provisioned" by destroying, or discontinuing the composite view. The contents can be directly moved to another employee, or the reassigning of content to another employee may occur as the processes and data are assigned to others, and thus will become part of the others' composite views.

The view may include information, processes, dashboards, etc. Information may include work related items, for example, business contact lists, project assignments, customer lists, products, group file links, etc. Information may be related to day-to-day items not necessarily directly related to work tasks, for example, parking locations, emergency procedures, hazardous material warnings, cafeteria locations/hours/menus and "crowdedness," names and contact information for nearby workers, location maps/layouts, how to get medical assistance, IT services, HR services, etc. The composite or collected information provides benefit over simply pointing an employee to websites, links, shared networks, etc.

Accessing the composite view may be performed through a corporate intranet. The composite view may be initiated upon login of the employee to any networked computer. While a general discussion of the composite view has been provided, specific details may be more applicable to either the service directory or the dynamic work center. Note that these are merely labels and can be called by different names. Additionally, details for a service directory or work center are provided below, but should be understood as providing example implementations of composite views, and other implementations are possible.

Work can be performed within a dynamic work center. The work center provides an action execution environment. A dynamic work center is generated as a composite view or composite application for performing one or more actions related to a work task. The composite application is generated from a framework that leverages a service-oriented platform. An enterprise may include a repository of reusable business actions and data objects that can be used to generate composite applications.

In one embodiment, a dynamic work center provides a collection of other work centers, each work center associated with, and generated for, a particular action or activity. The dynamic work center may provide access to all actions and activities of a user. The actions and activities of a user represent work that the user needs to perform or assign. The dynamic work center includes an object instance for a given object instantiated for a specific action, activity, or guided procedure. The dynamic work center application has a service oriented, model-based architecture based on an application framework. The dynamic work center is a modeled application, and so event handlers and screens are not needed in order to instantiate it.

A dynamic work center provides callable services related to actions or work items and a context. As a modeled application, a dynamic work center can provide the callable services on top of cross-functional applications from backend system. The callable services can be provided in a portal. The dynamic work center can provide trackable objects, by being able to monitor the behavior of data objects that the dynamic work center can access (e.g., based on context).

Work can be associated with particular objects, which are first instantiated, and then work centers, guided procedures, actions, and/or activities (sets of actions), are each renderable or invokeable from the instantiated objects. Once invoked, a work center for actions or an activity can be transformed into a guided procedure through a state transition. Similarly, a guided procedure can be transformed into an action or activity through a state transition. A guided procedure provides frames in which a user is guided to do work. A guided procedures can act as a framework (design-time and run-time) to support the interactive and dynamic scenarios of the composite applications described herein. In one embodiment, a guided procedure is generated by making use of an underlying JAVA adhoc workflow engine and restricting usage to a relatively small number of patterns.

A work center as used herein may refer to a view in which to perform actions on tasks of a process, and may or may not refer to a dynamic work center. A dynamic work center can be understood as providing additional contextual tools to a work center as previously known. A dynamic work center can aggregate or access other work centers.

A service directory provides a high-level view to data and processes. A service directory can act as a launching point to information and mechanisms for performing work. A service directory may include personal information in addition to the information discussed above. Information disclosure on the Service Directory employee website can be subject to corporate security policies and employee control (including opt-out and opt-in for privacy). Thus, each observant of the personalized service directory may see a different view of the employee. Employees can add files, processes, and so forth, to their service directory, to provide a single point of access to anything wanted or needed at work. Blogs, threaded discussion groups for interests or skills, shareable files/photographs, etc., would be available to others subject to security privileges.

In one embodiment, service directories are aggregated by department, building, floor, geographic location, division, etc. Service directories may or may not be physically or even logically partitioned from each other, but can be stored individually or together in a single database. Multiple service directories can be provided based on the same enterprise data. In one embodiment, all personalized service directories are stored in a common (possibly distributed) database, and are rendered as a view on demand (e.g., via login, via a request to access data, etc.). A distributed (or replicated) database can support high speed access to the service directories.

As mentioned above, context indicates a particular environment in which data exists. The objects have "awareness" of their contexts, and may be affected by the context. Context may be stored in metadata associated with the object. The work centers provide an environment in which to interact with the objects (e.g., access, modify, perform an operation using the data, etc.). Work is performed through the execution of an action. An action provides a mechanism to invoke a service to perform an operation related to data. An action provides an operation in a process. A process includes one or more phases or events, each of which involves one or more actions. Some processes have a single phase, or a single thing to do (e.g., changing an address). Note that a certain phase of a process may link to one or more other processes through an event. Some processes have multiple phases, or multiple things to do or operations to perform to complete the phase of the process (e.g., give an employee a raise). A process can be considered to be a set of actions, where the set can include one or more actions.

Each user may have permission to invoke different services and perform different actions, which will show in a work center dynamically. A particular work center includes the different items to which the user has permission related to the activity represented by the work center. An activity is a standalone transaction. A few of the many possible examples of activities may include budgeting, a hiring process, a performance review process, or other management activities. An activity can also contain another activity or process (for example, a management activity may include a "Budget 2006 Process"). An activity invoked within the framework described herein can accept input parameters, and send feedback to its output parameters.

In one embodiment, all actions and activities are aware of the enterprise framework in which they are executed (meaning the work centers and the context-aware environment). In an alternate embodiment, a function or processing may be invoked from a program that is unaware of the enterprise framework. The unaware function may be invoked within an activity by wrapping the external function with metadata that identifies an activity and provides the hooks necessary to execute the function within the enterprise framework. The metadata wrapper leaves the underlying program unaffected, while still allowing access to its functionality. Metadata can be modified for either an external program or enterprise data. Business processes and actions can affect metadata. The use of the metadata can provide persistence to the external programs by allowing a change from within a business process to be stored for another use of the external program.

A work center or a service directory can include particular standard views that can be customized or added to by a composite view user. A view manager can enable the views to be turned on or off, and enable customization. For example, one standard view may be a view of status of all activities or actions related to the composite view (e.g., a work center). Another standard view could be a list of pending items for the particular user. Another view may provide a visualization of all services available within the composite view. The view manager can provide all views in a contextual manner, taking into account particular authorizations or permissions. Other views may include views of activity participants, documents involved, costs, ad hoc collaborations (e.g., threaded discussions), etc. The view manager can be generic to allow the views to apply to any composite view application, and change based on the change in context.

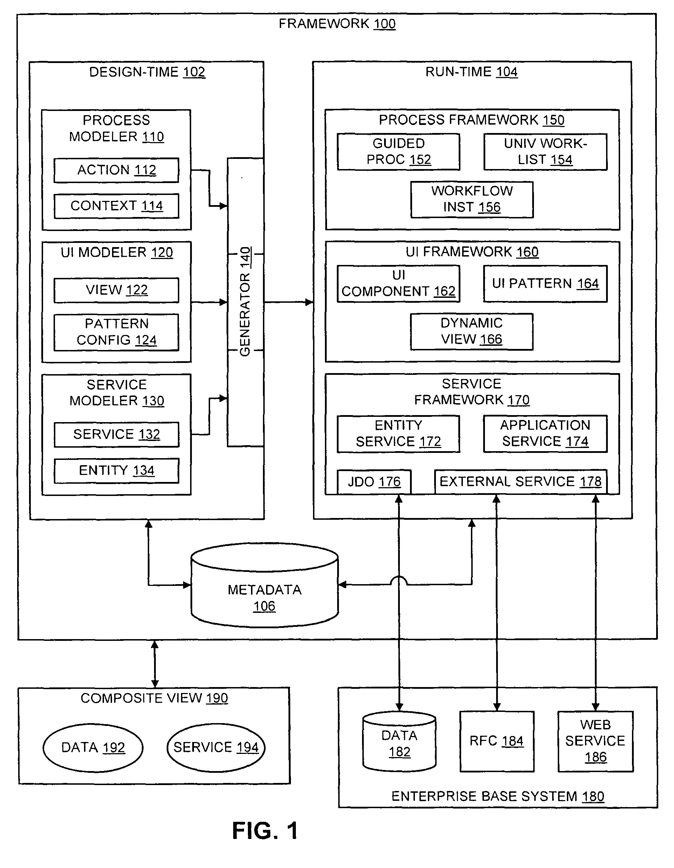

**Figure 1** is a block diagram of an embodiment of an application framework with run-time and design-time components. In general, framework 100 leverages and enhances underlying enterprise base system 180, which could include one or more elements of data and/or functionality to perform operations. Framework 100 provides a structure with which to generate composite applications, which are modeled/generated software. Composite applications may support semi-structured processes, handle event-driven and knowledge-based business scenarios, and/or support collaboration. In one embodiment, composite applications support the JAVA stack. The composite applications may be broken down into various portions, each of which may be separately generated/modeled. The composite application portions may, in one implementation, be implemented as Enterprise Java Beans (EJBs), and in other implementations, the design-time components may have the ability to generate the run-time implementation into different platforms, such as J2EE, ABAP, or .NET.

Framework 100 generally allows composite applications to work within existing system environment by decoupling the applications from the underlying enterprise platform. Decoupling the applications from the underlying enterprise platforms may include providing communication to back-end systems via a central interface and providing a back-end-independent object model. Framework 100 includes design-time components 102 and run-time components 104. Design-time components 102 include modeling components with which to generate a composite application, and one or more mechanisms to generate the model. In general, design-time components 102 are responsible for developing composite applications that are executed by run-time components 104.

Design-time components 102 include process modeler 110, UI modeler 120, and service modeler 130. These modelers are not necessarily separate entities, although they may be. Furthermore, additional modeling tools may be provided within design-time components 102. In general, the modelers allow for integrating business objects, business services, business processes, user interfaces, etc. Process modeler 110 includes the capability of generating one or more actions 112, which represent the various phases of a process. Each action 112 has an associated operation or operations that represent the work of action 112. Action 112 may be part of an activity that is generated, or part of a guided procedure that provides interaction with the user on performing operations. In an embodiment where action 112 is part of a guided procedure, process modeler 110 includes information with each action 112 to execute the guided procedure.

Process modeler 110 also includes context 114, which provides awareness to the process regarding the enterprise system in which it is operating. Where a function is used from an application that does not understand the enterprise system, process modeler 110 can wrap the function in metadata to incorporate the function into the system.

User Interface (UI) modeler 120 provides the ability to generate a user interface and provide views of data/processes that can be accessed through a composite application generated with framework 100. UI modeler 120 can generate any of a number of views 122 on data. In one embodiment, standard views or patterns are used for each application developed. A user interface may include certain elements from a template. Thus, user interfaces may have certain common components and provide a familiar look and feel across multiple applications. Certain views are dependent upon the environment in which the application is executed. Views 122 may include capability to dynamically generate views based on roles, authorizations, and activities associated with the application. Pattern configuration 124 of UI modeler 120 allows the use of templates and standard UI components.

Service modeler 130 enables a composite application to access data. Data objects are accessed via services. Thus, service modeler 130 provides the service-oriented model through which data is accessed. In one embodiment, service modeler 130 provides an enterprise service architecture (ESA), where applications are developed through a service-driven, rather than a model-driven, architecture. A service-driven architecture provides access to callable services that provide interaction with data. Service modeler 130 includes service 132, which represents one or more service that may be provided. Service 132 may include, but is not limited to, guided procedures, object monitoring, standalone actions, programs or functions, etc. Entity 134 of service modeler 130 provides a component generated to access a service within the enterprise, or a web service. An enterprise or web service as described here refer to entities within a network (either within a network of the enterprise, or within the Internet) that are addressable and provide a capability based on a request and/or input parameters (e.g., flight booking).

Generator 140 represents one or more components to transform the model into run-time components. In one embodiment, generator 140 is a single component, while in alternate embodiments, generator 140 is multiple components.

Run-time components 104 provide instantiation of the items modeled with run-time components 102, and include various frameworks within which object or service instances operate. Process framework 150 represents a framework under which one or more instances of processes can execute. For example, process framework 150 may include guided procedure 152, universal worklist 154, and/or workflow instance 156. Guided procedure 152 represents an instance of a guided procedure as discussed previously. Universal worklist 154 provides a list of all workflow or process items available to a user. A workflow or process may be available to a user through an operation requested of the user on the workflow/process, and/or through the user having a responsibility authorization with respect to the workflow/process. Universal worklist 154 may be used to access work centers for each process available. Workflow instance 156 provides an example of one or more workflows that represent work requested of a user. The workflow may have one or more actions for the user to perform.

UI framework 160 provides abilities to render views on data and processes. In one embodiment, UI framework 160 includes a view manager (not shown) that provides dynamic management of content that will be displayed/presented to a user. UI framework 160 may include UI component 162, which represents one or more elements of a user display. In one embodiment, UI component 162 includes elements for rendering the display in a web browser, although another environment could be used. In one embodiment, a separate application viewer could be used. UI pattern 164 provides patterns and standard elements for rendering the user interface. UI pattern 164 may provide UI component 162. UI pattern 164 may be a template with various components 162 to provide buttons, links, text, etc., that may be standard to every application generated, or partially customized with instance-specific data.

In one embodiment, UI framework 160 includes dynamic view 166. Dynamic view 166 represents a view that has one or more dynamic components, and may change the content of the application that provided to a user. Dynamic view 166 changes content based on an authorization of a user. The content can be changed dynamically to reflect personnel structuring changes (e.g., moves, promotions, terminations), and change of the underlying data or service content.

Service framework 170 implements the data access through services available to the user. A user may have access to one or more entity services 172, application services 174, JAVA data object (JDO) services 176, and/or external services 178. Application service 174 represents services local to the composite application, or directly accessible by the application. JDO 176 can access data 182 of enterprise base system 180. Similarly, enterprise base system 180 may include remote functions that are accessed through one or more remote function calls (RFCs) 184, and one or more web services 186. External service 178 accesses elements remote elements (for example, RFC 184 and web service 186).

Metadata 106 represents an abstraction of one or more data and/or access/service resources that may be accessed and utilized by design-time components 102 and run-time components 104. Metadata 106 is not necessarily a resource within one of the components, nor is it to be understood as being only available to the components. Metadata 106 provides a repository that includes metadata about business objects, business services, business processes, and/or other application portions for use in modeling and/or executing the application portions. Thus, an application portion may be modeled, as well as the origin of the data, whether in a local database, remote database, or a combination of the two. In one embodiment, the content of metadata 106 includes information extending beyond a specific implementation of an application portion. There could be repositories that describe a specific implementation, which may be filled from a more general repository. Metadata 106 can be understood as including a general, a specific, or a combination of repository information.

Composite view 190 represents a composite application provided through framework 100. Composite view 190 can be a service directory or a dynamic work center according to any embodiment described herein. Composite view 190 includes one or more elements of data 192 and one or more services 194. Run-time components 104 generate instances of modeled elements, which are presented as composite view 190. Composite view 190 is subject to contextual information that provides dynamic content for composite view 190.

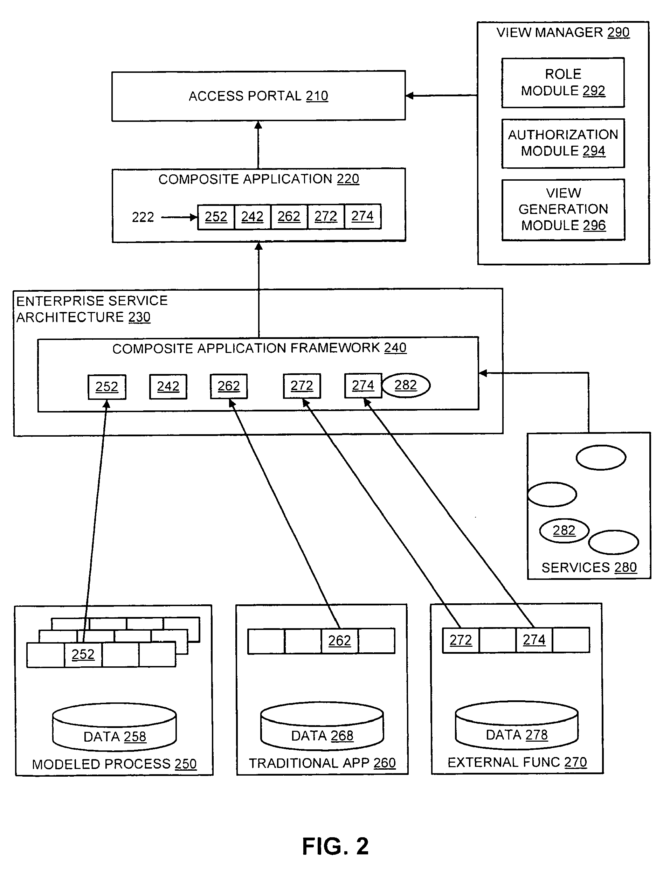

**Figure 2** is a block diagram of an embodiment of an enterprise service architecture. The enterprise service architecture provides an architecture through which to provide dynamic content views and access through access portal 210. Access portal 210 may be any type of network portal through which an enterprise may be accessed.

The system of Figure 2 may include multiple types of sources for functionality that are combined as a composite application. For purposes of example, and not by way of limitation, a composite application will be considered that includes components from several functionality sources. The use of different sources of functionality should not be understood as a requirement to the development of a dynamic data view as described herein. Examples of potential sources of functionality include modeled process 250, traditional application 260, and external functionality 270.

Modeled process 250 includes one or more processes that are generated from modeled components, for example, according to a framework as described in Figure 1. Modeled process 250 includes data 258, which represents data related to the processes of modeled process 250. One element of a process is phase 252, which may include certain actions or activities or guided procedures.

Traditional application 260 includes one or more processes generated from a more traditional application. In this case, a more traditional application is one that is not modeled, in contrast to modeled process 260. Rather than being modeled and generated, traditional application 260 may include proprietary functionality, or services and data not based on a standard components available across sub-systems. Traditional application 260 includes data 268, which represents data related to the process of traditional application 260. One element of the process is phase 262, which may include functionality desired for a dynamic composite view. Traditional application 260 and modeled process 250 may understand the underlying framework and system in which the composite view will be instantiated. Thus, phases 252 and 262 may be contextually aware.

External function 270 includes one or more processes available outside the environment of the enterprise system. For example, external function 270 may represent a function available from a program that is a third-party as to the enterprise system. External function 270 may be a remote function that is accessed and executed. Phases 272 and 274 represent phases of a process of external function 270 that are desired for a composite application. Metadata may be included when bringing in components from external function 270, which can serve as a wrapper to incorporate the external functionality.

Services 280 represent one or more services that can provide a service to a composite process. Services 280 include service 282, which provides a service to be incorporated into the composite process of a composite application.

The selected process phases and service(s) are pulled in to enterprise service architecture 230 through composite application framework 240. Composite application framework 240 is a framework according to an embodiment of Framework 100 of Figure 1. A process phase may also be generated within the framework that is not pulled from existing processes. For example, composite application framework may model phase 242 as an element of the composite application process. Each of the phases and services selected for a composite application are combined to generate composite application 220, which includes composite process 222 generated of the various selected elements. Namely, phases 252, 242, 262, 272, and 274 are combined to form composite process 222 that is accessible to a user through access portal 210.

In one embodiment, the system of Figure 2 includes view manager 290. View manager 290 provides management of the views available to a user through access portal 210. For example, composite application 220 can be limited to be accessible only to users with a particular authorization, which includes a role and permissions within the context of an activity. View manager 290 includes role module 292 to determine what role a user has, or under what role a user is requesting access to (e.g., trying to "view") composite process 222 (e.g., a user may have multiple roles, one that has permissions to access composite process 222, and one that does not). View manager 290 includes authorization module or manager 294 to determine an authorization associated with the role, or with a particular context. View manager 290 may determine what activity is associated with composite process 222, which may be used in determining the authorization. In one embodiment, authorization module 294 of view manager 290 provides authorization enforcement and restricts views for which a proper authorization is not had. View manager 290 further includes view generation module 296 to generate a view based on the role and authorization for the activity, and provide the view in response to the request for access.

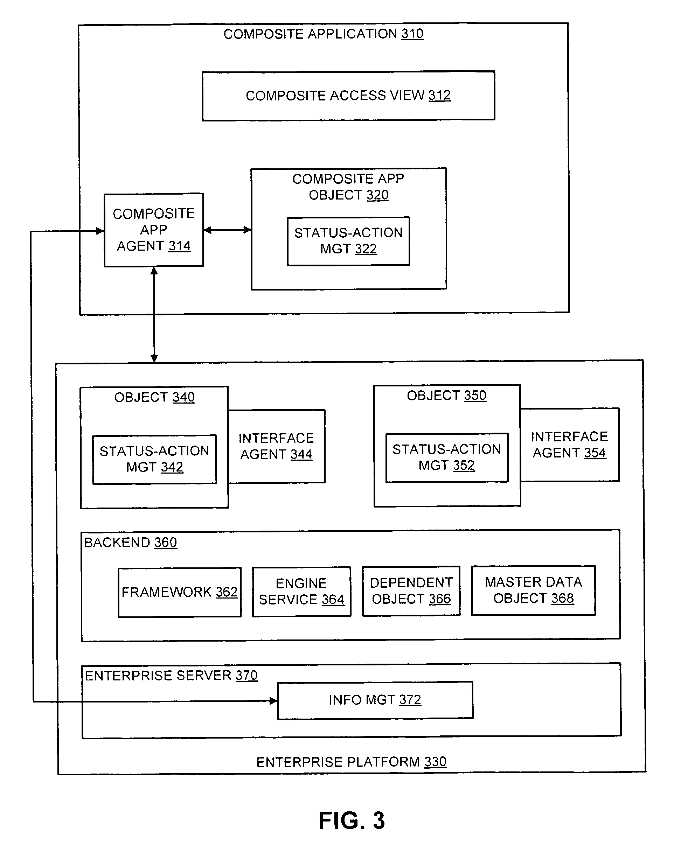

**Figure 3** is a block diagram of an embodiment of a composite application architecture. Composite application 310 is an example of a composite application or a composite view according to any embodiment described herein. Composite application 310 is generated with a service-oriented architecture to provide access to cross-functional components of backend systems. Composite application 310 includes composite access view 312, which represents a dynamic view that varies content as the underlying accessed system components change, and varies content in response to different permissions being used to access the composite application. Composite access view 312 includes roles and work centers, composite application-specific user interfaces, etc. With regard to the dynamic views, in response to being invoked by a user with a particular authorization, composite access view 312 may display certain content. In response to being invoked by a different user with a different authorization, or by the same user with a different authorization, different content may be displayed, or different access possible.

Composite application 310 includes composite application (app) object 320, which represents an object related to composite application 310. Composite application object 320 includes status/action management (mgt) 322, which can be used to track composite application object 320. Status/action management 322 may manage the behavior of the object and provide consistency between the instance of composite application object 320 and enterprise platform 330. Composite application object 320 has an associated composite application agent 314, which provides input and output to/from object 320. In one embodiment, composite application agent 314 is multiple agent entities, and may be an input agent and an output agent. Additionally, composite application agent 314 may provide queries or requests to/from composite application object 320. In one embodiment, each object of composite application 310 has a separate agent or agents. In another embodiment, composite application agent 314 is associated with composite application 310, and provides services for multiple object instances within composite application 310.

Enterprise platform 330 may have multiple objects 340 and 350, each of which may have an interface agent, specifically, interface agents 344 and 354, respectively. Through the agents, objects 340 and 350 may access or be accessed by other components of enterprise platform 330. Objects 340 and 350 also include status/action management 342 and 352, respectively. Objects 340 and 350 represent objects from which specific instances may be generated in composite application 310.

Enterprise platform 330 includes backend 360, which provides backend components for the enterprise. Backend 360 may include framework 362, which may be a composite application framework as described herein to provide a framework with which to generate composite application 310. Engine service 364 provides backend services that are leveraged to generate composite application 310. Dependent object 366 and master data object 368 represent object types available in backend 360.

Enterprise platform 330 also includes enterprise server 370 with information management 372, which provides management functions, including analytics, search, tasks, master data, etc.

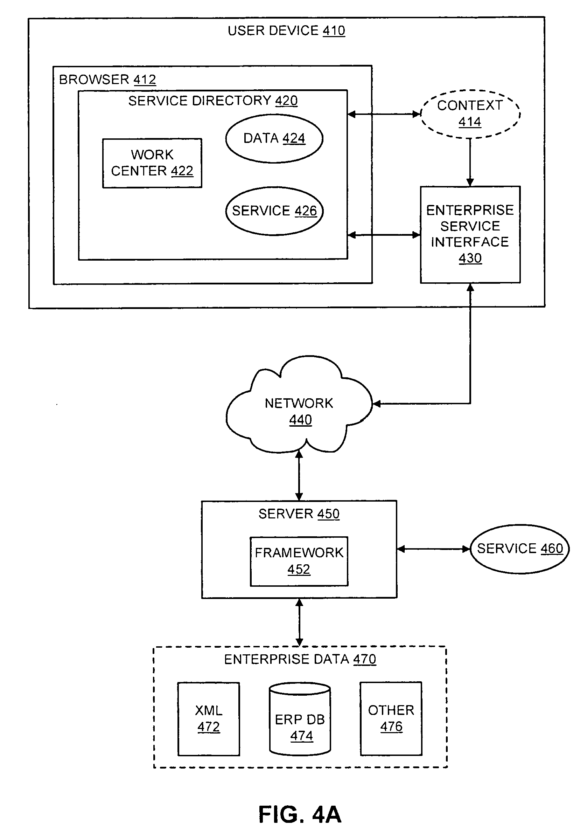

**Figure 4A** is a block diagram of an embodiment of a user device with a service directory. User device 410 represents a computer device on which a user accesses an enterprise. In one embodiment, user device 410 includes browser 412 represents a web browser or program that acts as a user agent with which to access network content. Browser 412 provides one example of a program that can be used to display a service directory or a dynamic work center or other composite application. In one embodiment, browser 412 includes service directory 420, which represents one type of composite application that can be generated from enterprise data with a framework. Service directory 420 includes work center 422, data 424, and service 426.

Work center 422 represents one or more applications in which to perform work-level actions. Work center 422 may be a known work center or a dynamic work center as described herein. Note that although service directory 420 may launch work center 422, service directory 420 is not necessary in order to access work center 422, which may also be accessed through a control center or other work center. Data 424 represents data objects and other information that can be displayed in a dynamic view to a user. Service 426 represents one or more services available to a user from within service directory 420. Collectively, work center 422, data 424, and service 426 are the content of service directory 420. The content of service directory 420 is dynamically provided based on context 414. Context 414 represents any combination of roles, activities, and authorizations, as described above.

Enterprise service interface 430 represents one or more components to provide access from user device 410 to a network and an underlying enterprise system. In one embodiment, enterprise service interface 430 includes a view manager to limit the content of service directory 420 according to context 414. Enterprise service interface 430 may also include a portal through which to access network 440. Network 440 may include any type of network, and represents both hardware and software or network protocol(s) with which user device 410 accesses server 450. Network 440 may include a local area network (LAN), a wireless LAN (WLAN), a virtual private network (VPN), virtual LAN (VLAN), wide area network (including the Internet), etc.

Server 450 includes framework 452 to generate service directory as a composite application. Server 450 is an enterprise server and provides access to one or more services 460, which may be incorporated into service directory 420, and to one or more elements of enterprise data 470. Enterprise data 470 can include any type of data or information, and may include for example, extensible markup language (XML) data, enterprise resource planning database (ERP DB) 474, or other data 476. There is no limitation on the type of data accessible to service directory 420, except through the permissions provided through an authorization, as described previously.

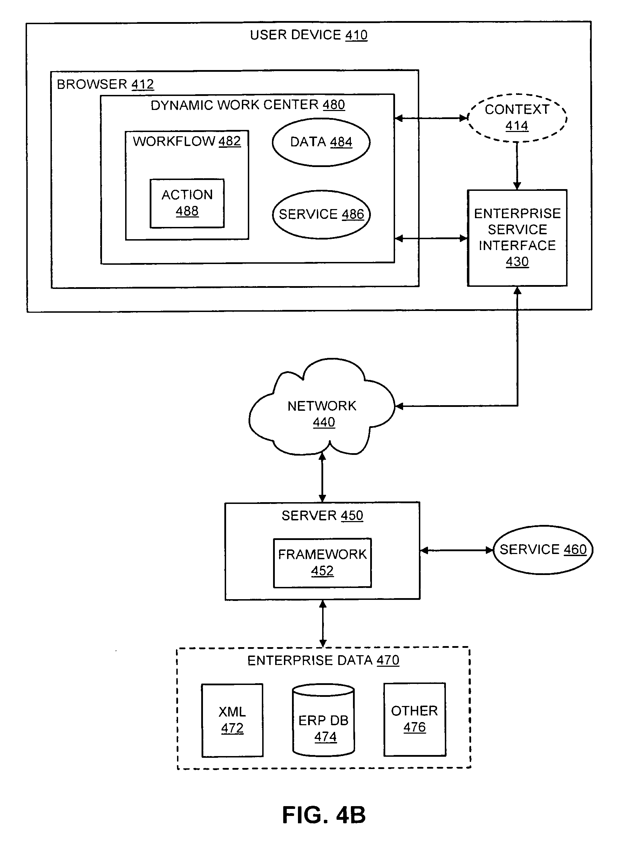

**Figure 4B** is a block diagram of an embodiment of a user device with a dynamic work center. Similarly to Figure 4A, browser 412 may include dynamic work center 480 as a composite application. The application of context 414, and the function of enterprise service interface 430 can be the same or similar as with service directory 420.

Dynamic work center 480 includes data 484 and service 486, which are similar to data 424 and service 426 of service directory 420. The scope of content in dynamic work center is limited to an activity or process, or to the launching of other work centers, and may be more restricted than service directory 420. Dynamic work center 480 also includes workflow 482, which has one or more actions 488. In one embodiment, dynamic work center 480 does not exist until workflow 482 is assigned to the user logged on to user device 410. Workflow 482 includes work to be done by the user.

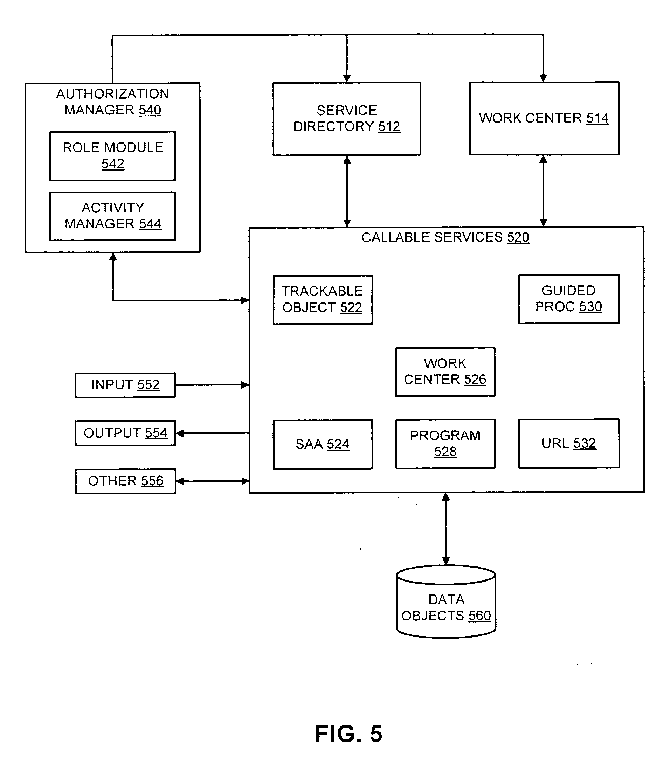

**Figure 5** is a block diagram of an embodiment of callable services. As discussed previously, composite applications are generated using a framework. Service directory 512 and work center 514 are examples of composite applications that can be generated. The composite applications have access to callable services 520 based on an authorization received from authorization manager 540. Thus, data or services available through an enterprise system are viewable and accessible to the composite applications based on permissions associated with an authorization data structure. Authorization manager 540 generates or determines an authorization based on the context of a data request. A view manager may work in conjunction with authorization manager 540 to determine the authorization by determining what role is present, and potentially what permissions are associated with the role. Also, the authorization can be determined by determining what process is involved, in the case of work-level composite applications (e.g., work center 514).

Authorization manager 540 may include role module 542 and authorization module 544, both of which are examples of similar modules as discussed previously. Briefly, role module 542 determines a role associated with an action to enable authorization manager 540 to provide a context-appropriate authorization. Authorization module 544 enables authorization manager 540 to generate authorizations. Role module 542 and authorization module 544 work in conjunction with activity manager 546, which represents one or more components that enable authorization manager 540 to determine an activity for which callable services 520 are to be called. For a specific activity and a role, an authorization can be modeled. Similarly, for a given authorization and role, an activity can be generated.

Callable services 520 may include one or more services that can be called or invoked by the composite applications. For example, trackable object 522 represents any object that can be monitored or whose behavior is observed. Standalone action (SAA) 524 represents an action or activity that is a complete transaction. Some transactions access or invoke other processes. Standalone actions are transactions that become completed upon the completion of the work associated with the action in the work center. Note that standalone actions can be part of a larger activity or process that has multiple parts or phases.

Work center 526 can be part of either service directory 512 acting as a control center, or a part of work center 514, which may by a dynamic representation of all work. Program 528 represents a function or a service provided by a software executable or routine. Guided procedure 530 provides a guided process of actions to help the user complete work involving several phases. Universal resource locator (URL) 532 represents the address of a service or website that provides a service.

Data objects are accessed or acted upon through services to which a user has access. Through callable services 520, a user of the composite applications may access data objects 560. Callable services 520 may also have input 552, output 554, and other interaction 556. Input 552 represents input parameters that affect how a callable service is accessed, or how it executes. Output 554 represents the results or reports generated by callable services 520 in relation to performing data access. Other interaction 556 may be, for example, determination of permissions associated with authorization 540, or enterprise-level context, etc.

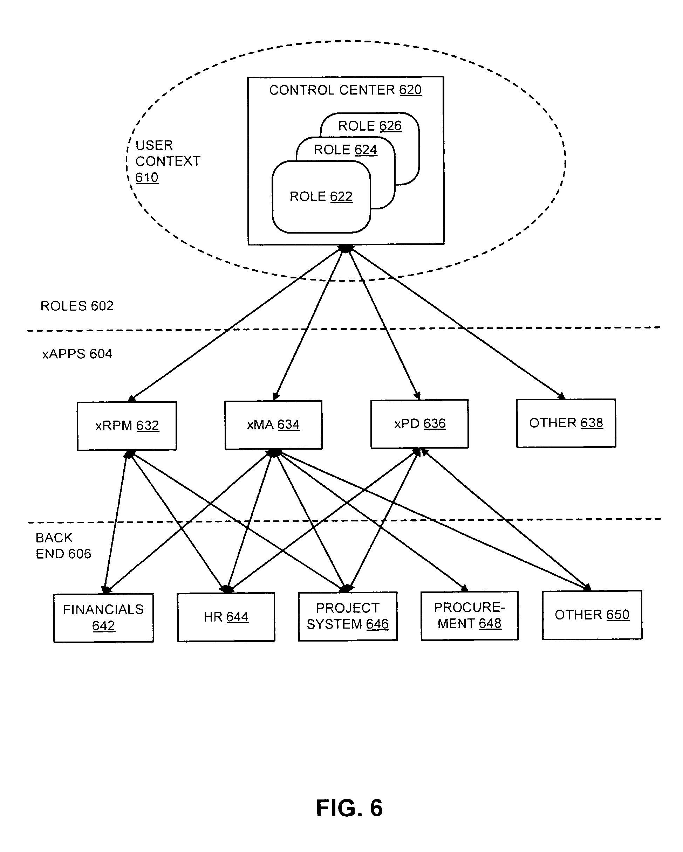

**Figure 6** is a block diagram of an embodiment of a dynamic work center having access to multiple backend services. The roles layer 602 includes user context 610 includes the context as described above, and affects what views and access a user has to data or services. Control center 620 provides a container for a user to manage work and access work centers that are relevant to completing work. A single user may include several roles 622-626. Roles 622-626 may also represent roles of different users accessing the same process. The different roles may result in dynamically different views based on an authorization associated with the role. In one embodiment, a manager or administrator has all permissions available. Thus, one role may belong to a user as a developer, which results in a particular view. One role may belong to a manager, which results in a different view. A manager with all permissions may have a third view on the same process. The differences have to do with the different roles, even though the underlying base system is the same.

Below the roles layer 602 is the xApps, or composite applications layer 604. xApps 604 includes several cross functional elements that can be used to generate a dynamic composite application. Examples of composite systems may include xRPM (composite resource planning management) 632, xMA (composite mergers & acquisitions) 634, xPD (composite product data) 636, and other 638. Other systems could also or alternatively be involved in a dynamic composite application. These composite applications access underlying base systems in backend 606. Examples of such backend systems include financials 642, HR (human resources) 644, project system 646, procurement 648, and other 650.

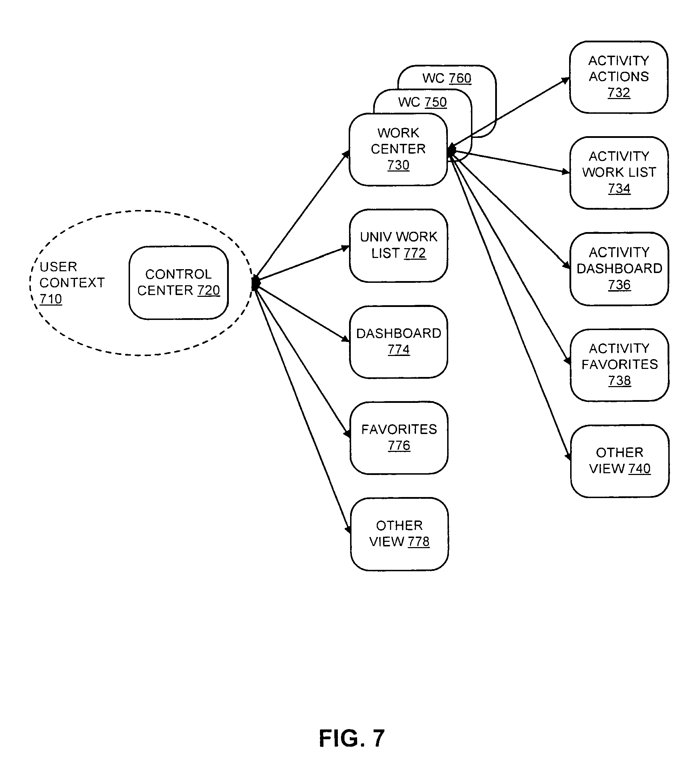

**Figure 7** is a block diagram of an embodiment of a control center having a dynamic work center. User context 810 provides a role and an authorization for a user to access data. User context 810 determines what is accessible via control center 820, which provides a view on work. In one embodiment, a service directory acts as a control center. From control center 820, a user may access work centers 830, 850, or 860, universal worklist 872, dashboard 874, favorites 876, or other views 878. Universal worklist 872 provides a view of work (e.g., workflows, actions, processes) to be performed by the user. Dashboard 874 provides another view to see status of work or work to be performed by the user. Another possible view is a favorites view 876, which may show data based on recent or long term access history, on selected preferences (e.g., show work items due within the next 3 days), or assigned view (e.g., pushed from a manager). Other views 878 are possible.

Work center 830 includes actions to perform work. Work center 830 is dynamic and provides the ability to change the content provided to a user. The user can thus be provided with the most relevant information for being productive and getting work done. Examples of views on the content of work center 830 include activity actions 832 (individual tasks to execute), activity work list 834 (a list of all work activities), activity dashboard 836 (a more spatial, graphical layout of work tasks), activity favorites 838 (e.g., a customized view for the activity), or other views 840. Although not explicitly shown, work centers 850 and 860 could have similar views. Not only can a user change between views, but the content shown by any of the views will dynamically change as described herein.

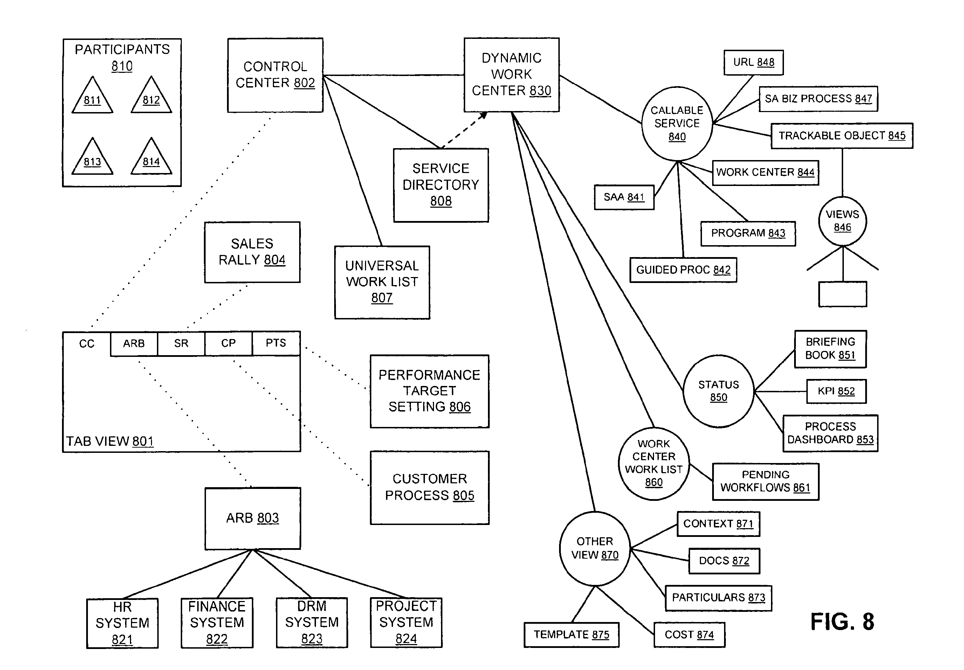

**Figure 8** is a block diagram of an embodiment of a dynamic work center accessed via a tab view. Figure 8 is described below in terms of a tabbed view for providing access to an Annual Raises and Bonuses (ARB) process, although a dynamic work center could be provided for any of a number of processes, and accessed via other views. Tab view 801 is provided to a user through a user interface. The user interface may be rendered through a web browser, as mentioned previously. Tab view 801 includes tabs that can be selected to provide different contextual views on information. A tab is provided by the system for each process initiated in the system to which an authorization provides access to a view. Thus, a tab indicates the existence of a process to which an authorization enables access. Tab view 801 is influenced based on a role and an authorization. In one embodiment, the tabs are accessible because the role and authorization of a user of tab view 801 has access to each of the categories represented by each tab. Briefly, tabs are shown for ARB 803, sales rally (SR) 804, customer process (CP) 805, and performance target setting (PTS) 806. Other tabs may be present if other processes have been initiated to which an authorization enables access. The tabs may be displayed ARB 803 provides integrated access to multiple backend systems, for example, HR system 821, finance system 822, DRM system 823, and project system 824. The services of multiple systems are cross-functionally accessible through modeled software.

Participants 810 include individuals 811-814, which may be participants in the process of ARB 803 (e.g., Human Resources (HR) person, Controller, manager, employee being evaluated, an approver, etc.). In one embodiment, participants 810 represents roles in a process, and thus, a single individual may represent multiple participants (for example, if the Manager is the Approver, or similar situations). Additionally, a single individual may have different roles depending on the context of the process of ARB 803 (for example, being an evaluated employee for one instance, and being an Approver for another instance). Each participant receives a dynamic work center related to the process of ARB 803, with each dynamic work center providing access to activities, guided procedures, and workflow tasks related to the specific roles. Thus, multiple participants 810 will participate in the overall process, and each may have different views on the same overall process, and have different activities within the process based on the roles.

In one embodiment, each tab of tab view 801 can be considered a work center, which provides information and links to do work. A user accesses work tasks through control center 802, which aggregates work centers and provides navigation to work. Control center 802 can provide access to universal work list 807, which can provide a list of all tasks for a particular user in a particular role. Control center 802 may also provide access to service directory 808, which is described herein. Briefly, service directory 808 may provide access to work (e.g., it may provide access to dynamic work center 830), as well as other information for a user.

Dynamic work center 830 dynamically provides access to services and views based on the role and authorization determined for the particular instantiation. Examples of items potentially accessible via dynamic work center 830 are subsequently described, which is not intended as either an exhaustive or a limiting description of the types of items available.

Dynamic work center 830 provides access to one or more callable services 840. Callable service 840 may include input fields, service links, or other mechanisms through which work can be accomplished. A callable service may include standalone action (SAA) 841, guided procedure 842, program 843 (e.g., a function of an external application), work center 844 (which is another work center that can be launched and accessed through dynamic work center 830), trackable object 845, standalone business (SA biz) process 847, and/or uniform resource locator (URL) 848. Standalone action 841 and guided procedure 842 are described above. Standalone business process 847 is a business process that is self-contained, similarly to standalone action 841. Standalone business process 847 may be accessed and executed from within dynamic work center 830. URL 848 may provide a locator for a particular service to which the role and authorization provide access. Trackable object 845 may be any object or service that can be monitored. In one embodiment, trackable object 845 provides access to multiple different types of views 846, which can provide different ways to track the object. Callable service 840 provides functionality to perform a process related to ARB 803.

Dynamic work center 830 can also provide access to status 850, which can provide a view of one or more processes in a manner to allow status to be determined. In one embodiment, instead of, or in addition to, input fields, status 850 may provide tables, graphs, and/or other views to determine process status. In one embodiment, status 850 includes a thumbnail view of a process. The views may be high-level and allow drilling down, or they may be detailed, or some combination. Status 850 may include briefing book 851, key performance indicator (KPI) 852, and/or process dashboard 853. Briefing book 851 may provide an automated status report that reports on a scheduled basis (weekly, on certain days, etc.), or asynchronously (e.g., the user may select to update status "now"). KPI 852 can provide overviews of a process and allow for access to more detailed information through drilling down. Process dashboard 853 may provide aggregate views of multiple processes, and may, for example, aggregate by process kind, department, or other aggregation factor. Status 850 can provide information regarding the progress being made on evaluating an employee for a raise and/or bonus.

Work center work list 860 provides a work list of tasks for a particular workflow, rather than an overall view of tasks provided by universal work list 807. Work center work list 860 is specific to the process or activity selected or viewed in dynamic work center 830, and can include pending workflows 861. In the example of ARB 803, work center work list 860 can provide a list of all workflows (which corresponds to work centers) that have tasks related to an annual raises and bonuses role.

Dynamic work center 830 also provides access to other view 870, which may provide other views on work related to the authorization for which dynamic work center 830 is instantiated. Other view 870 may include anything related to a process. For example, other view 870 may provide access to context 871 of the process, documents 872, particulars 873, cost 874, and template 875. Documents 872 may be any documents attached to the process. Particulars 873 may include lists of participants, or other parameters of the process. Cost view 874 can show expenditures and comparisons against other processes or against a target. Template 875 may be any form of customized view that is associated with the process.

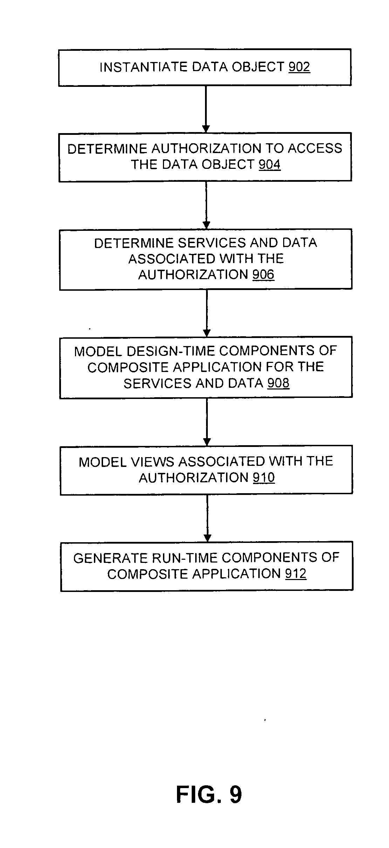

**Figure 9** is a flow diagram of an embodiment of generating a composite application. A composite application controller instantiates a data object, 902. The controller controls the generation of composite applications. The controller determines an authorization to access the data object, 904. The authorization may be determined in response to a request to access the data object. The authorization provides permissions to access data and services. The controller can determine what services and data are associated with the authorization, 906. Services and data associated with the authorization will be accessible in the composite application.

The controller can model design-time components of the composite application for the services and data determined to be accessible with the authorization, 908. The composite application is modeled software, and generated based on the authorization. In one embodiment, the composite application is generated for each data access. It can be re-generated or modified when an authorization or other context changes.

The views on the data to be provided by the composite application can also be modeled, 910. From the composite application model, the composite application controller can generate the run-time components of the composite application, 912, to instantiate the composite application. Note that certain of the operations discussed may be single operations, while others may involve multiple operations. The order of the operations is not necessarily restricted to the example provided in Figure 9, but could be varied in other implementations.

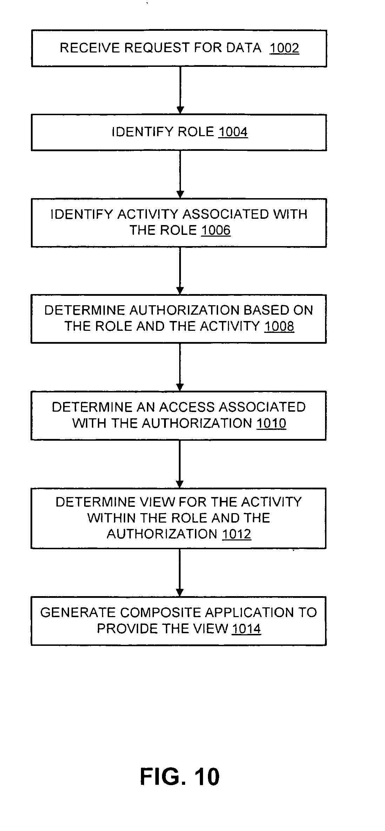

**Figure 10** is a flow diagram of an embodiment of accessing data in a composite view. An enterprise interface receives a request for data, 1002. The request for data can be generated by a user specifically attempting to access a process or data, or by a user signing in and bringing up a view in a work center or service directory that subsequently provides a view on the data and work for the user. The interface identifies a role associated with the request, 1004. In one embodiment, the role may be specifically selected within the service directory or work center. In an alternate embodiment, the role may be contextually determined, for example, by determining what type of processes are being viewed, by a user name and password, etc.

In one embodiment, the interface identifies the activity associated with the role, 1006. For certain data and certain authorizations, the activity involved is not relevant to the permissions. For other data or views, identifying the activity is an essential part of determining whether the requested view or the data request can be provided. From the role and potentially the activity, the interface can determine the authorization based on the role and the activity, 1008. The authorization may be dependent on what views can be provided within the specific role for the specific activity.

The interface determines an access associated with the authorization, 1010. The access may be whether the user can read, manipulate, "is responsible for," or some other permission to access the data in some way. The access allowed may determine what services will be provided in a view. The interface determines a view for the activity within the role and the authorization, 1012. The interface can determine a view for data not associated with a workflow, or data associated with a particular workflow process. In one embodiment, a particular requested view can be provided, but with restrictions on what data or processes will be accessible to a user from within the view. Particular views may be denied because a user does not have permission to access them. With a view and the services based on the access are known, a composite application manager can generate the composite application to provide the determined view, 1014.

Various descriptions herein make reference to managers or modules, which may include hardware, software, and/or a combination of these. In a case where a component to perform the functions described herein includes software, the software data, instructions, and/or configuration may be provided via an article of manufacture by a machine/electronic device/hardware. An article of manufacture may include a machine readable medium having content to provide instructions, data, etc. The content may result in an electronic device as described herein, performing various operations or executions described. A machine readable medium includes any mechanism that provides (i.e., stores and/or transmits) information/content in a form accessible by a machine (e.g., computing device, electronic device, electronic system/subsystem, etc.). For example, a machine readable medium includes recordable/non-recordable media (e.g., read only memory (ROM), random access memory (RAM), magnetic disk storage media, optical storage media, flash memory devices, etc.). The machine readable medium may further include an electronic device having code loaded on a storage that may be executed when the electronic device is in operation. Thus, delivering an electronic device with such code may be understood as providing the article of manufacture with such content described herein. Furthermore, storing code on a database or other memory location and offering the code for download over a communication medium may be understood as providing the article of manufacture with such content described herein.

Besides what is described herein, various modifications may be made to the disclosed embodiments and implementations of the invention without departing from their scope. Therefore, the illustrations and examples herein should be construed in an illustrative, and not a restrictive sense. The scope of the invention should be measured solely by reference to the claims that follow.

## Claims

1. A method comprising:
identifying a business role associated with a request for data;
determining an authorization for access to the requested data, the authorization based, at least in part, on a context of the business role; and
generating a view to provide access to the data through a modeled software application, the view based, at least in part, on the determined authorization.

2. The method of claim 1, wherein determining the authorization comprises:
determining a responsibility authorization, the responsibility authorization to indicate an ownership role of the data.

3. The method of claim 2, wherein determining the responsibility authorization that indicates an ownership of the data comprises:
determining a responsibility authorization, which enables the view to provide access to the data whether or not the business role has work to perform with respect to the data.

4. The method of any one of the preceding claims, wherein determining the authorization for access to the requested data comprises:
determining the authorization for access to data including one or more of company information, non-work related information, or work group information.

5. The method of any one of the preceding claims, wherein generating the view comprises:
determining a work dashboard.

6. The method of any one of the preceding claims, generating the view comprises:
generating a work center within a service directory.

7. The method of any one of the preceding claims, further comprising:
automatically changing the generated view in response to a change in the business role.

8. The method of claim 7, wherein changing the generated view in response to the change comprises:
deprovisioning the generated view when a business role is terminated.

9. An article of manufacture comprising a machine readable medium having content stored thereon to provide instructions to cause a machine to perform instructions, including:
receiving a request for data, the request to indicate a business role associated with the request;
determining an authorization for access to the requested data, the authorization based, at least in part, on a context of the business role; and
generating a view to provide access to the data through a modeled software application, the view based, at least in part, on the determined authorization.

10. The article of manufacture of claim 9, wherein the instructions for receiving the request for the data comprise instructions for:
receiving a request to view a work center related to a workflow associated with the data.

11. The article of manufacture of claim 9 or 10, wherein the instructions for receiving the request for the data comprise instructions for:
receiving a request to provide an initial view associated with a login.

12. The article of manufacture of any one of the preceding claims 9 to 11, wherein the instructions for receiving the request to indicate the business role comprise instructions for:
identifying a workflow associated with the requested data;
identifying system credentials associated with the request; and/or
determining the business role from the system credentials with respect to the workflow.

13. A view manager comprising:
a business role module to receive a request for data and identify a business role associated with the request for data;
an authorization module to determine an authorization for access to the requested data based, at least in part, on a context of the business role; and
a view generation module to generate a modeled software view based, at least in part, on the determined authorization, to provide access to the data through a modeled software application.

14. The view manager of claim 13, wherein the view generation module generates a view that includes personal data.

15. The view manager of claim 13 or 14, wherein the view generation module generates a view that includes a generic, standard view.

16. The view manager of any one of the preceding claims 13 to 15, wherein the view generation module generates a view that includes a work center within a service directory.

17. The view manager of any one of the preceding claims 13 to 16, further comprising:
the business role module to determine a change in the business role, and indicate the change to the authorization module and the view generation module to dynamically alter the view.

18. A system comprising:
a web browser; and
a view manager having a business role module to receive a request for data and identify a business role associated with the request for data, an authorization module to determine an authorization for access to the requested data based, at least in part, on a context of the business role, and a view generation module to generate a view through a modeled software application to be rendered in the web browser, the view based, at least in part, on the determined authorization, to provide access to the data through the modeled software application.

19. The system of claim 18, wherein the modeled software application comprises a composite application.

20. The system of claim 18 or 19, wherein the view manager is to generate the view through the modeled software application by utilizing a service-oriented composite application framework.
